# EUROPEAN PATENT SPECIFICATION

(11) **EP 1 513 320 B1**
(45) Date of publication and mention of the grant of the patent: **15.02.2006**
(21) Application number: 03292201.5
(22) Date of filing: 05.09.2003
(51) Int. Cl.: H04L 29/08, H04L 29/06

(54) **Interaction server, computer program and method for adapting dialog modalities between a client and a server**
Interaktionserver, Computerprogram und Verfahren zur Anpassung von Dialogmodalitäten zwischen einem Client und einem Server
Serveur d'interaction, programme d'ordinateur et méthode pour l'adaptation des modalités de dialogue entre un client et un serveur

(43) Date of publication of application: 09.03.2005
(73) Proprietor: ALCATEL, 75008 Paris (FR)
(72) Inventor: Kopp, Dieter, 75428 Illingen (DE); Sienel, Jürgen, 71229 Leonberg (DE); Bales, Volker, 70825 Korntal (DE); Wajda, Wieslawa, 75210 Keltern (DE)
(74) Representative: Rausch, Gabriele

(56) References cited:
- WO-A-02/23857
- US-A1- 2003 028 643
- US-B1- 6 356 533

## Description

The present invention relates to an interaction server for adapting modalities of a dialog between one or several clients and one or several server applications as well as a method and a computer software product for adapting modalities of such dialog.

In recent years, computers have been provided with a plurality of different types of input devices, such as a key board, a mouse, a touch panel, an image scanner, a video camera, a pen and a microphone to enable various information items to be input in various forms. Also a plurality of different types of output devices, such as different forms of display units and a loudspeaker have been provided for outputting various information items in a variety of forms, such as different graphical forms or spoken language. Further, communication terminals provided with different types of input and output devices are enabling the input and the output of information items in various forms. For example, JP10107877 A describes a multi-modal telephone set which uses both a visual display and a synthesized voice to communicate with the user.

Further, application programming languages with alternative information types and the variant records like alt texts in HTML/http are available for performing access to arbitrary type of information.

US 2003/0028643 A1 describes a system and a method for transferring multimedia information from a source location to a destination location. The source output has a format different from the format required for the destination input. A proxy transcoder server (PTS) is coupled between the source output and the destination input. The PTS identifies the capabilities of the source and the destination, and accordingly transcodes the information from the source output format to the destination Input format. While the information is transcoded between different protocols, the method described in US 2003/0028843 A1 does not address the issues which arise when different types of terminals are to communicate with a server application.

WO 02/23857 A2 disposes a system for integrating an application which comprises a mobile application server, a mobile presentation server and an application repository. The mobile application server interfaces with the application by invoking methods corresponding to functions in the application. The application repository stores these methods used by the mobile application server. The mobile presentation server receives the application information from the mobile application server and transforms the information for presentation on a mobile devices. It comprises a data base that stores information about mobile devices and the corresponding browsers. The mobile presentation server selects voice and/or data device adapters by means of this data base. In case of voice communication, the mobile presentation server selects one of the voice device adapters for transmitting voice information to users for interaction. For data communication, the mobile presentation server selects one of the data device adapters to transmit data information to a display associated with the mobile device. Thereby, mobile presentation server can modify the resolution of an image to fit the display of the particular mobile device.

It is the object of the present invention to improve the interaction between a user and à server application executed by a network server.

The object of the present invention is achieved by an interaction server for adapting modalities of a dialog between one or several clients and one or several server applications according to claim 1. The object of the present invention is further achieved by a method for adapting modalities of a dialog between a client and a server according to claim 7. The object of the present invention is further achieved by a computer software product for adapting modalities of a dialog between a client and a server according to claim 9.

The present invention implements the basic idea to manage modalities with a proxy separately, i.e. not at the client (e.g. terminal) and not at the server or server application.

Several advantages are achieved by the present invention:

An universal modality interface is provided between clients and server applications. Both, the client and the server have not to take care to meet the modality capabilities and requirements of the other party. Client and server implementation is simplified. Network services are not longer restricted to one specific type of terminal, but a plurality of different kinds of network services may be accessed by a plurality of different types of terminals via the interaction server. A heterogeneous client environment is hidden from the network. Consequently, the efficiency of service creation and service provisioning is increased and the number of available network services is drastically increased.

Further advantages are achieved by the embodiments indicated by the dependant claims.

A modality mediating interaction server is located between the clients and the servers. A server could offer several modalities to the interaction server and a client could subscribe several modalities. The interaction server performs a matching and/or arrange a modality agreement, a modality adaptation, or a modality conversion. Further, transfer protocols could be adapted leading to a more efficient communication.

According to a preferred embodiment of the invention, the modality handler consider mediation modality capability data describing terminal and service representation capabilities and modality requirement data describing service and/or user presentation requirements to perform the mediation between the client and the several application.

Modality capabilities are, for example, available input and output devices of a terminal, the type of classification of these input/output devices, e.g. the size and the color capabilities of a liquid crystal display, and the terminal hardware/software support of these input/output devices.

If all these aforementioned data are considered by the modality handler during the mediation step, the modality handler is in a position to select the dialog modalities of a particular dialog in an optimized way.

Further advantages are achieved if the modality handler considers in addition terminal and/or user preferences. For example, the user could personally select modalities he intends to use for interacting with a network service. Also, a server application providing a network service may set modality preferences indicating the modalities which are best to provide the service. Further, environmental data, for example the actual location of the client, may be taken into consideration for the selection the dialog modalities. These additional features help the modality handler to adapt dialog modalities to current user needs.

To support the above described process, the service application provides information like the identification of the service provided by the service application, its service class, its service type and its service preferences to the modality handler. The other way around, the modality handler receives information like client type, client identifier, user, user type, location of the client. user preferences, client preferences and/or client environmental data for performing the mediation step.

Further advantages are achieved if the modality handler accesses a terminal, user and/or service profile for mediating between the dialog modality capabilities and/or dialog modality requirements of the client and the server application. This helps to minimize the data flow over the network and supports a proper mediation between the different interests.

According to a further preferred embodiment of the invention, the modality handler provides, in addition to the above described modality selection function, modality adaptation and/or modality conversion functions. For example, the modality handler creates a dialog modality specification of said dialog specifying the selected dialog modalities, which is used by a dialog engine for performing the adaptation and conversion functions.

An efficient and proper adaptation is achieved by a dialog engine accessing a multi-modal service script provided by the server application, the created dialog specification and a dialog building data base.

The efficiency of the modality conversion and/or adaptation functions of the server is increased by providing a multi-modal backend within the interaction server executing a dialog script created by the dialog engine. The multi-modal backend may comprise a set of browser applications selected case by case to communicate with the client. Further, the multi-modal backend may comprise a set of media-processing units, for example speech recognition, text to speech or handwriting recognition, for communicating with the client. This specific architecture increases the efficiency of the data processing and makes it possible to support a big number of different types of clients in an efficient way.

Further advantages are achieved by the provisioning of a protocol conversion function within the interaction server converting between the protocols used for the communication between the interaction server and the servers executing the server applications and the protocols used for the communication between a specific client and the interaction server.

These as well as other features and advantages of the invention may be better appreciated by reading the following detailed description of preferred exemplary embodiments taken in conjunction with accompanying drawings of which:
- Fig. 1: is a block diagram showing an overview of a system with an interaction server according to the present invention;
- Fig. 2: is a block diagram demonstrating the interaction between the interaction servers of fig. 1 and clients and server applications;
- Fig. 3: is a block diagram showing the client, the interaction server and the server application of Fig. 2;
- Fig. 4: is a detailed block diagram of an interaction server.

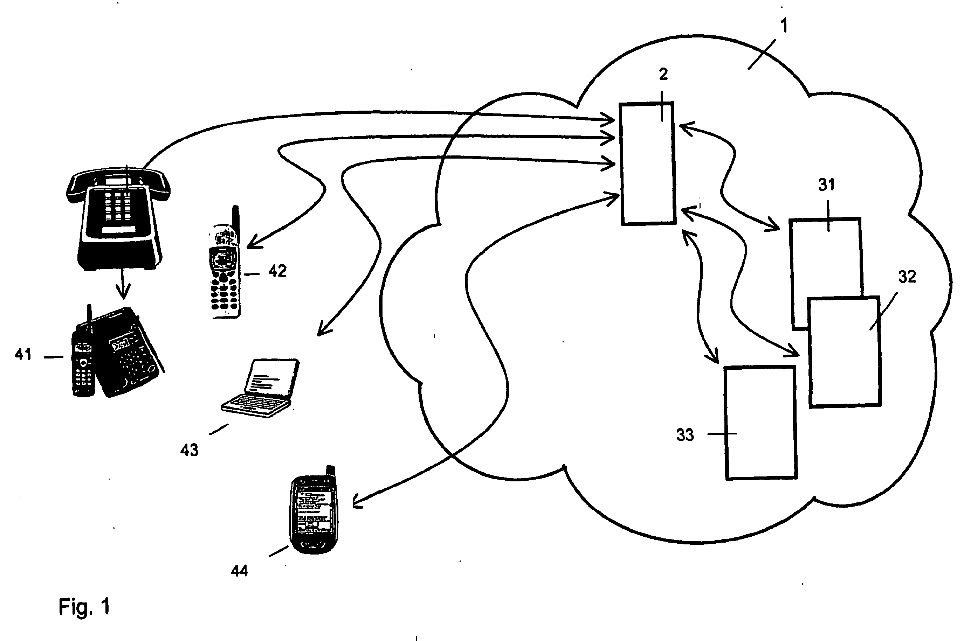

Fig. 1 shows a communication network 1, several clients 41, 42, 43 and 44, an interaction server 2 and several servers 31, 32 and 33.

The client 41 is a voice phone, for example an ISDN-phone or PSTN-phone (ISDN = Integrated Service Digital Network; PSDN = Public Switched Telecommunication Network). As indicated in Fig. 1, this voice phone can be a cordless one which communicates with a base station, for example, via a DECT radio interface (DECT = Digital Enhanced Cordless Telephone).

The client 42 is a data enabled phone; for example a GSM cell phone with GPRS capability (GSM = Global System for Mobile Communication; GPRS = General Packet Radio Service).

The client 43 is a portable computer connected with the communication network 1. The client 43 communicates, for example, via a TCP/IP protocol with the interaction server 2 wherein the TCP/IP communication bases, for example, on a wireless LAN, DSL or intemet protocol (TCP = Transaction Capability Protocol; IP = Internet Protocol; DSL = Digital Subscriber Line).

The client 44 is a smart phone, for example an UMTS phone with multi-modal inputting and outputting capabilities (UMTS = Universal Mobile Teleoommunications).

Each of the different clients 41 to 44 uses different communication protocols to communicate with the interaction server 2. Further, each of the different clients 41 to 44 provides a different set of modalities for the interaction with the respective user.

A modality describes the way how information is presented from the client to the user or from the user to the client. For example, a information may be submitted as voice message, written information on a screen, by an icon or a graphic displayed on a screen, by pressing a specific key of a key-pad, by entering a handwritten command, by a pen, by a mouse-pad, by a voice command, by a typed command word or by touching an icon on a touch pad.

Depending on the kind of client, a specific set of the modalities is supported by the respective client. For example, the smart phone 44 might use voice only, graphical only or operate in a multi-modal way, for example via HTML plus or flash with speech recognition, text to speech and handwriting recognition located in the interaction server 2 or in the client 44.

The interaction server 2 handles voice, graphic and multi-modal interaction for all the different clients 41 to 44. On the other side, the transaction server 2 interacts, for example via a multi-modal markup language, e. g. via HTML plus, SALT, or X+V, or via Flash, with the servers 31 to 33. Each of the servers 31 to 33 executes at least one server application which can be contacted by one of the clients 41 to 44 for performing a respective network service. When contacted by one of the clients 41 to 44, the server application interacts with the respective clients 41 to 44 via the interaction server 2 which handles the different modalities of the clients 41 to 44 for the server application, ensures to have the same dialog structure and gives independence of IP and TDM word (TDM = Time Division Multiplexing).

The interaction server 2 provides a common interface for service applications, for example IM, E-mail, Presence. Further, it performs network translator and call control functions, for server applications, for example for voice, video, gaming and conferencing.

The interaction server 2 controls the dialog between the various clients 41 to 43 and the various server applications. A set of dialog modality capabilities or dialog modality requirements of clients and/or server applications are provided to the interaction server. Based on this set of information, the interaction server mediates between the dialog modality capabilities and/or dialog modality requirements of a client and the respectively assigned server, and selecting the dialog modalities for this specific dialog between one specific client and one specific server application based on said mediation.

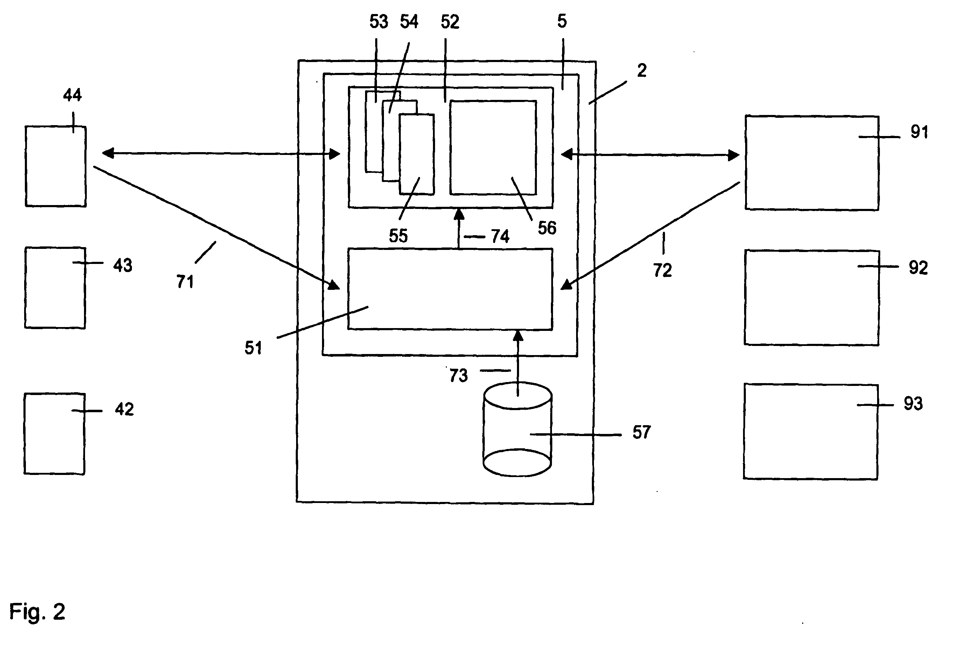

Fig. 2 shows an embodiment of a detailed implementation of the interaction server 2.

Fig. 2 shows the clients 42 to 44, several server applications 91 to 93 and the interaction server 2.

The interaction server 2 consists of a hardware platform, a software platform basing on the hardware platform and several application programs executed by the system platform formed by the software and hardware platform. These application programs or a selected part of these application programs constitute a computer software product providing the function of a modality handler as described in the following, when executed on the system platform. Further, such computer software product is constituted by a storage medium storing these application programs or said selected part of application programs.

From functional point of view, the interaction server 2 comprises a modality handler 5 and a profile data base 57. The modality handler 5 contains a dialog controller 51 and a dialog engine 52. During the establishment of a session with a server application 91, the client 44 submits several information 71 to the dialog controller 51, which are used by the dialog controller 51 to determine the dialog modality capabilities and/or dialog modality requirements of the client 44. Further, the server application 91 submits information 72 to the dialog controller 51, which enables the dialog controller 51 to determine dialog modality capabilities and/or dialog modality requirements of the selected server application 91.

For example, the information 71 contains an identifier of the client 44, an identifier of the user currently associated with the client 44, the client type, the user type, client class or user class assigned to client 44, user preferences, client preferences and/or client environmental data like location of the client, local temperature, lightning conditions and so on.

The information 72 contains, for example, a server application identifier, a service type, a service class associated with the server application, and/or service preferences.

Further, it is also possible that the information 71 and 72 does already contain dialog modality capability data and/or dialogue modality requirement data assigned by the client 44 and the server application 91 to the intended dialog, respectively. But, these data or at least a part of these data are preferably determined by the dialog controller 51 itself, for example, by means of accessing the profile data base 57 or another data source depending on the submitted information 71 and 72.

The profile data base 57 contains terminal, user, and/or services profiles of different clients, different users and different server applications. For example, the profile data base 57 contains a terminal profile for each different type or each different class of clients, for example one terminal profile for each of the different clients 41 to 44. Each of these terminal profiles comprises a set of specific data describing the terminal presentation capabilities and terminal preferences of the respective type or class of terminals. For example, it specifies the respective input and output devices of these clients and the respective associated hardware and software support as well as details of these input and output devices influencing the presentation or the inputting of data (for example size, solution and color capabilities of a screen). Further, the profile data base 57 contains, for example, a set of user preferences which might be personalized by each user by online access to the interaction server 2. Further, the profile data base 57 contains modality requirement data and modality capability data describing the service presentation/interaction capabilities and requirements of different server applications.

As already indicated above, all these modality capability and modality requirement data may be provided by the profile data base 57, the client and/or the server application linked in a dialog, and/or by a further data base accessed by the dialog control 51.

The dialog control 51 considers the available information, i.e. the determined dialog modality capability and/or dialog modality requirement data of the server application 91 and the client 44, as well as the client, user and/or server application preferences and obtained environmental data, to mediate between the client 44 and the server application 91 and come to a selection of dialog modalities for this dialog that meets the interests of the client 44 and the requirements and limitations set by the server application 91.

In the following, the selected dialog modalities form the frame work of the further interaction between the client 44 and the server application 91 as well as the frame work for the interaction between the user and the service provided by help of the server application 91 and the client 44.

It is possible that the selected dialog modalities are submitted to the client 44 and/or the server application 91 to establish the further interaction based on these constraints. But, these data are preferably used by the modality handler 5 to adapt the modalities between the client application 44 and the server application 91. Preferably, the modality handler 5 comprises a dialog engine 52 performing a modality and communication conversion or adapting function between the client 44 and the server application 91. The dialog engine 52 receives information 74 from the dialog controller 91 containing a dialog modality specification describing the selected dialog modalities for the intended dialog. The dialog engine comprises dialog conversion and adaptation means 56 and communication protocol conversion and adaptation means 53 to 55 performing these functionalities.

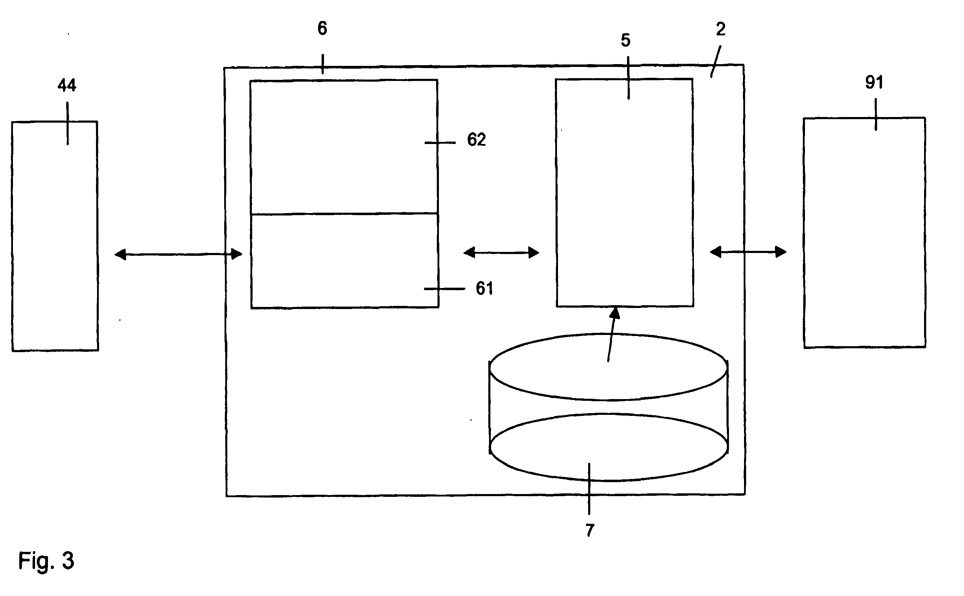

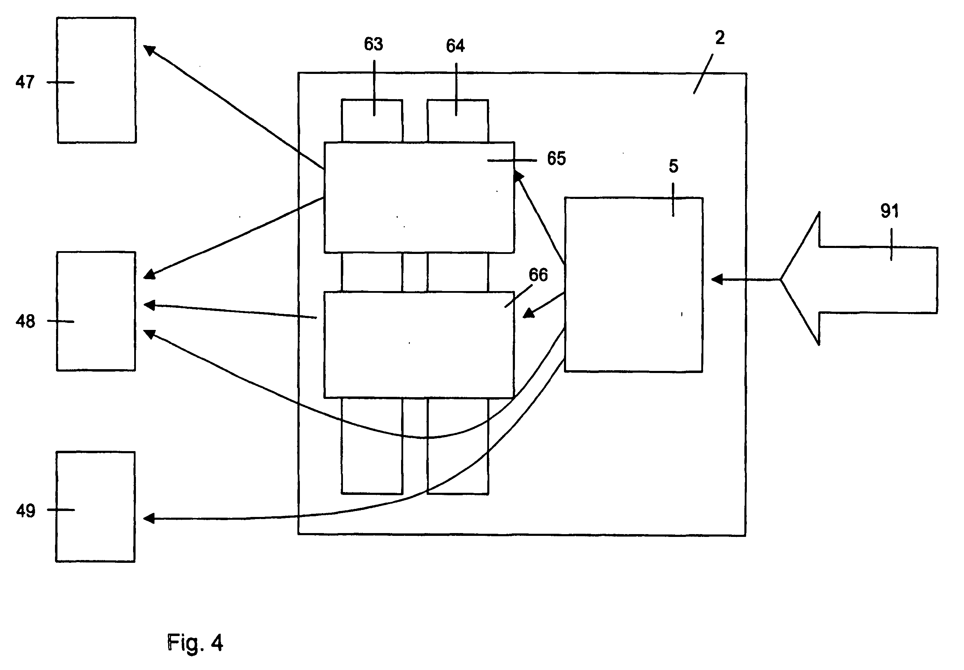

Fig. 3 and fig. 4 show further details of the interaction server 2 and clarify further details of the interactions performed after selection of the dialog modalities.

Fig. 3 shows the interaction server 2, the client 44 and the server application 91. The interaction server 2 comprises the modality handler 5, a dialog building data base 7 and a multi modal backend 6.

The dialogue manager 5 provides dialog management including terminal adaptation and user profile handling. It accesses a multi-modal services script provided by the server application 91. For example, this multi-modal service script is encoded in the XML-language (XML = Extended Mark-up Language). The dialog building data base 7 comprises libraries providing functional sets of different service interactions as well as design or restriction parameters. The dialogue engine of the modality handler 5 accesses the multi-modal services script of the server application 91, the dialog specification prepared by the dialog controller and the dialog building data base to a dialog specification executed by the multi-modal backend 6. For example, the modality handler submits a dialog specification encoded in a multimodal markup language, e. g. HTML plus, SALT or X+V (HTML = Hyper Text Mark-up Language) to the multi-modal backend. In contrast to the multi-modal service script provided by the server application 91 to the modality handler 5, the dialog specification provided from the modality handler to the multi-modal backend 6 does already respect the selected dialog modalities. The multi-modal backend comprises a terminal 61 and several multi-media processing units 62 supporting the work of the terminal 61. For example, the media processing units provide text to speech translation, handwriting recognition and speech recognition functionalities.

In an analog way as described above it is also possible to provide a specific mono-mode service script to the modality handler 5 which provides in the following by help of the dialog building data base 7 an dialog specification respecting the selected dialog modalities.

Fig. 4 shows the interaction server 2, the server application 91 and the client 47 to 49. The interaction server 2 comprises the modality handler 5, a set of browser applications 65 and 66 and a set of media processing units 63 and 64. For example, a media processing unit 63 is a text to speech processing unit and the media processing unit 64 is a speech recognition unit. For example, the browser application 56 is voice browser providing a Voice XML interface (XML = Extended Mark-up Language) and the browser application is the server part of multi-modal browser. As already described by hand of fig. 3 the modality handler 5 does also provide a HTML interface or a multi-modal markup language interface, e. g. a, HTML plus, SALT or X+V interface.

The client 47 is a voice only terminal. The interaction between this voice only terminal and the server application 91 is supported by the modality handler 5 and the voice browser 56 controlled by the modality handler.

The client 48 is a multi-modal terminal. The interaction between this terminal and the server application 91 is supported by the modality handler, the voice browser 65 and the multi-modal browser 66. For voice use, the modality handler controls the voice browser 65 which forms the server side backend. For multi-modal use, the interaction is performed through the multi-modal browser 66. For HTML-use, the modality handler directly interacts with the client 48.

The client 49 is a computer communicating with the interaction server 2 via HTML. In case of an interaction between the client 49 and the server application 91, the modality handler 5 directly interacts with the client 49.

In addition to the above demonstrated possibilities of client-server-interaction, it is further possible that the modality handler controls a direct interaction between the server application 91 and one of the browser applications 65 and 66 as well as one of the clients 48 and 49, if the server application supports the specific modality and protocol. If, for example, the server application 91 supports Voice XML, a direct interaction between the server application 91 and the browser application 95 is possible. Further, a direct interaction between the server application 91 and the HTML terminal provided by the client 49 is possible, if the server application 91 supports HTML.

## Claims

1. An interaction server (2) for adapting modalities of a dialog between one or several clients (41 to 44 and 47 to 49) and one or several server applications (91 to 93),
the interaction server (2) comprising a modality handler (5) adapted to receive a set of dialog modality capability data and dialog modality requirement data (71, 72, 73) assigned to an intended dialog between a particular client (44) and a particular server application (91), wherein a modality describes the way how information is presented from the client to the user or from the user to the client and specifies whether information is submitted as voice message, written information on a screen, by an icon or a graphic displayed on a screen, by pressing a specific key of a key-pad, by entering a handwritten command, by a typed command word or by touching an icon on a touch pad; **characterized in that** the modality handler (5) is adapted to mediate between the dialog modality capabilities and dialog modality requirements of the client (44) and the server application (91) and consider for said mediation modality capability data describing terminal and service representation capabilities and modality requirement data describing service and/or user representation requirements, and to select the dialog modalities of said dialog based on said mediation.

2. The interaction server (2) of claim 1,
**characterized in that**
the modality handler (5) is adapted to consider for said mediation terminal, user and/or service preferences and/or to consider for said mediation terminal and/or user environmental data, in particular location data describing the actual location of said client.

3. The interaction server (2) of claim 1,
**characterized in that**
the modality handler (5) is adapted to access terminal, user and/or service profiler data (57) for mediating between said dialog modality capabilities and/or dialog modality requirements of the client and the server application.

4. The interaction server (2) of claim 1,
**characterized in that**
the modality handler (5) is adapted to create a dialog modality specification of said dialog specifying the selected dialog modalities and the modality handler (5) comprises a dialog engine (52) accessing a multi-modal service script provided by the server application, said dialog specification and a dialog building data base (7).

5. The interaction server (2) of claim 4,
**characterized in that**
the interaction server comprises a multi-modal backend (6) executing a dialog description provided by the dialog engine, the multi-modal backend (6) comprises a set of browser applications (56, 66) and the multi-modal backend (6) is adapted to use selected ones of these browser applications (56, 66) for communicating with the client (47 to 49).

6. The interaction server (2) of claim 5,
**characterized in that**
the interaction server (2) comprises a set of multi-media processing units (63, 64) accessed by the multi-modal backend for communicating with the client (47 to 49).

7. A method for adapting modalities of a dialog between a client (41 to 44 and 47 to 49) and a server (31 to 33),
the method comprising the step of: providing a set of dialog modality capabilities and dialog modality requirements to an interaction server (2) comprising a modality handler (5), wherein a modality describes the way how information is presented from the client to the user or from the user to the client and specifies whether information is submitted as voice message, written information on a screen, by an icon or a graphic displayed on a screen, by pressing a specific key of a key-pad, by entering a handwritten command, by a typed command word or by touching an icon on a touch pad **characterized in that** the method also comprises the steps of mediating, by the modality handler (5), 25 between the dialog modality capabilities and dialog modality requirements of the client (44) and the server (31) and considering for said mediation modality capability data describing terminal and service representation capabilities and modality requirement data describing service and/or user representation requirements; and the modality handler (5) selecting the dialog modalities of said dialog based on said mediation.

8. The method of claim 7,
**characterized in**
by the further step of providing, by the interaction server, a modality and/or protocol conversion.

9. A computer software product for adapting modalities of a dialog between a client (41 to 49) and a server (31 to 33),
the computer software product being adapted to perform, when executed by a computer, the step of: receiving a set of dialog modality capability data and dialog modality requirement data of the client and the server, wherein a modality describes the way how information is presented from the client to the user or from the user to the client and specifies whether information is submitted as voice message, written information on a screen, by an icon or a graphic displayed on a screen, by pressing a specific key of a key-pad, by entering a handwritten command, by a typed command word or by touching an icon on a touch pad; **characterized in that** the computer software product is also adapted to perform the steps of mediating between the dialog modality capabilities and dialog modality requirements of the client (41 to 49) and the server (31 to 33) and considering for said mediation modality capability data describing terminal and service representation capabilities and modality requirement data describing service and/or user representation requirements; and selecting the dialog modalities of said dialog based on said mediation.

## Patentansprüche

1. Ein Interaktionsserver (2) zur Anpassung der Dialogmodalitäten zwischen einem oder mehreren Clients (41 bis 44 und 47 bis 49) und einer oder mehreren Serveranwendungen (91 bis 93),
wobei der Interaktionsserver (2) einen Modalitäten-Handler (5) beinhaltet, der in der Lage ist, einen Satz mit den Daten der Dialogmodalitäten-Fähigkeiten und den Daten der Dialogmodalitäten-Vorgaben (71, 72, 73) zu empfangen, die einem vorgesehenen Dialog zwischen einem bestimmten Client (44) und einer bestimmten Serveranwendung (91) zugeordnet sind, wobei eine Modalität die Art und Weise beschreibt, wie die Informationen vom Client an den Nutzer oder vom Nutzer an den Client dargestellt werden, und festlegt, ob die Informationen als Sprachmitteilung, als schriftliche Daten auf einem Bildschirm, als Symbol oder Graphik auf einem Bildschirm durch Drücken einer speziellen Taste auf einer Tastatur, durch Eingabe eines handgeschriebenen Befehls, durch ein eingetipptes Befehlswort oder durch Drücken eines Symbols auf einem Touchpad übermittelt werden,
**dadurch gekennzeichnet, dass** der Modalitäten-Handler (5) in der Lage ist, zwischen den Dialogmodalitäten-Fähigkeiten und den Dialogmodalitäten-Vorgaben des Clients (44) und der Serveranwendung (91) zu vermitteln und bei der genannten Vermittlung die Daten zur Modalitätenfähigkeit, die die Fähigkeiten zur Terminal- und Dienstedarstellung beschreiben, sowie die Daten zur Modalitätenvorgabe zu berücksichtigen, in denen die Vorgaben für die Dienste- und/oder Nutzer-Darstellung beschrieben sind, und die Dialogmodalitäten für den genannten Dialog auf der Basis der genannten Vermittlung auszuwählen.

2. Der Interaktionsserver (2) aus Anspruch 1,
**dadurch gekennzeichnet, dass**
der Modalitäten-Handler (5) in der Lage ist, bei der genannten Vermittlung die Präferenzen von Terminal, Nutzer und/oder Dienst zu berücksichtigen und für die genannte Vermittlung die Daten des Terminals und/oder der Nutzerumgebung zu berücksichtigen, insbesondere die Standortdaten, die den aktuellen Standort des genannten Clients beschreiben.

3. Der Interaktionsserver (2) aus Anspruch 1,
**dadurch gekennzeichnet, dass**
der Modalitäten-Handler (5) in der Lage ist, zur Vermittlung zwischen den genannten Dialogmodalitäten-Fähigkeiten und/oder den Dialogmodalitäten-Vorgaben des Clients und der Serveranwendung auf die Terminal-, Nutzer- und/oder Diensteprofildaten (57) zuzugreifen.

4. Der Interaktionsserver (2) aus Anspruch 1,
**dadurch gekennzeichnet, dass**
der Modalitäten-Handler (5) in der Lage ist, eine Dialogmodalitäten-Spezifikation für den genannten Dialog zu erstellen, in der die gewählten Dialogmodalitäten spezifiziert sind, und **dass** der Modalitäten-Handler (5) eine Dialogmaschine (52) beinhaltet, die auf ein Multimode-Dienstescript zugreift, das von der Serveranwendung, der genannten Dialogspezifikation und einer Datenbank zum Dialogaufbau (7) zur Verfügung gestellt wird.

5. Der Interaktionsserver (2) aus Anspruch 4,
**dadurch gekennzeichnet, dass**
der Interaktionsserver ein Multimode-Backend (6) umfasst, das eine von der Dialogmaschine übermittelte Dialogbeschreibung ausführt, wobei das Multimode-Backend (6) einen Satz Browser-Anwendungen (56, 66) umfasst und das Multimode-Backend (6) in der Lage ist, bestimmte dieser Browser-Anwendungen (56, 66) zur Kommunikation mit dem Client (47 bis 49) auszuwählen.

6. Der Interaktionsserver (2) aus Anspruch 5,
**dadurch gekennzeichnet, dass**
der Interaktionsserver (2) einen Satz Multimedia-Verarbeitungseinheiten (63, 64) beinhaltet, auf die das Multimode-Backend zur Kommunikation mit dem Client (47 bis 49) zugreift.

7. Ein Verfahren zur Anpassung der Dialogmodalitäten zwischen einem Client (41 bis 44 und 47 bis 49) und einem Server (31 bis 33),
wobei das Verfahren den folgenden Schritt umfasst: Bereitstellung einer Reihe von Dialogmodalitäten-Fähigkeiten und Dialogmodalitäten-Vorgaben für einen Interaktionsserver (2), der einen Modalitäten-Handler (5) beinhaltet, wobei eine Modalität die Art und Weise beschreibt, wie die Informationen vom Client an den Nutzer oder vom Nutzer an den Client dargestellt werden und die festlegt, ob die Informationen als Sprachmitteilung, schriftliche Daten auf einem Bildschirm, als Symbol oder Graphik auf einem Bildschirm übermittelt werden, indem eine spezielle Taste auf einer Tastatur gedrückt wird, durch Eingabe eines handgeschriebenen Befehls, durch ein eingegebenes Befehlswort oder durch Drücken eines Symbols auf einem Touchpad, wobei das Verfahren außerdem die Schritte zur Vermittlung zwischen den Dialogmodalitäten-Fähigkeiten und den Dialogmodalitäten-Vorgaben des Clients (44) und des Servers (31) durch den Modalitäten-Handlex (5) umfasst, wobei bei der genannten Vermittlung die Daten zur Modalitätenfähigkeit, die die Darstellungsfähigkeiten des Terminals und des Dienstes beschreiben, und die Daten der Modalitätenvorgaben, die die Darstellungsvorgaben des Dienstes und/oder des Nutzers beschreiben, berücksichtigt werden und wobei der Modalitäten-Handler (5) die Dialogmodalitäten für den genannten Dialog auf der Basis der genannten Vermittlung auswählt.

8. Das Verfahren aus Anspruch 7,
**gekennzeichnet durch**
einen weiteren Schritt zur Bereitstellung einer Modalitäten- und/oder Protokollkonvertierung **durch** den Interaktionsserver.

9. Ein Computer-Softwareprodukt zur Anpassung der Dialogmodalitäten eines Clients (41 bis 49) und eines Servers (31 bis 33),
wobei das Computer-Softwareprodukt bei der Ausführung auf einem Computer in der Lage ist, den Schritt zum Empfang eines Satzes an Daten mit Dialogmodalitäten-Fähigkeiten und Daten mit Dialogmodalitäten-Vorgaben des Clients und des Servers auszuführen, wobei eine Modalität die Art und Weise beschreibt, wie die Informationen vom Client an den Nutzer oder vom Nutzer an den Client dargestellt werden und die festlegt, ob die Informationen als Sprachmitteilung, schriftliche Daten auf einem Bildschirm, als Symbol oder Graphik auf einem Bildschirm übermittelt werden, indem eine spezielle Taste auf einer Tastatur gedrückt wird, durch Eingabe eines handgeschriebenen Befehls, durch ein eingegebenes Befehlswort oder durch Drücken eines Symbols auf einem Touchpad, wobei das Computer-Softwareprodukt außerdem in der Lage ist, die Schritte zur Vermittlung zwischen den Dialogmodalitäten-Fähigkeiten und den Dialogmodalitäten-Vorgaben des Clients (41 bis 49) und des Servers (31 bis 33) durch den Modalitäten-Handler durchzuführen, wobei bei der genannten Vermittlung die Daten zur Modalitätenfähigkeit, die die Darstellungsfähigkeiten des Terminals und des Dienstes beschreiben, und die Daten der Modalitätenvorgaben, die die Darstellungsvorgaben des Dienstes und/oder des Nutzers beschreiben, berücksichtigt werden und wobei der Modalitäten-Handler die Dialogmodalitäten für den genannten Dialog auf der Basis der genannten Vermittlung auswählt.

## Revendications

1. Serveur d'interaction (2) destiné à adapter des modalités d'un dialogue entre un ou plusieurs clients (41 à 44 et 47 à 49) et une ou plusieurs applications de serveur (91 à 93),
le serveur d'interaction (2) comprenant un gestionnaire de modalité (5) adapté pour recevoir un ensemble de données de capacité de modalité de dialogue et de données de conditions requises de modalité de dialogue (71, 72, 73) affectées à un dialogue souhaité entre un client particulier (44) et une application de serveur particulière (91), dans lequel une modalité décrit la manière dont les informations sont présentées depuis le client vers l'utilisateur ou depuis l'utilisateur vers le client et spécifie si des informations sont soumises comme un message vocal, des informations écrites sur un écran, par une icône ou un graphique affiché sur un écran, en enfonçant une touche spécifique d'un clavier, en saisissant une commande manuscrite, par un mot de commande saisi ou en touchant une icône sur un pavé tactile ; **caractérisé en ce que** le gestionnaire de modalité (5) est adapté pour servir d'intermédiaire entre les capacités de modalité de dialogue et les conditions requises de dialogue du client (44) et l'application de serveur (91) et considérer pour ladite médiation des données de capacité de modalité décrivant des capacités de représentation de terminal et de service et des données de conditions requises de modalité décrivant des conditions requises de représentant de service et/ou d'utilisateur, et pour sélectionner les modalités de dialogue dudit dialogue en fonction de ladite médiation.

2. Serveur d'interaction (2) selon la revendication 1,
**caractérisé en ce que**
le gestionnaire de modalité (5) est adapté pour considérer pour ladite médiation, les préférences du terminal, de l'utilisateur et/ou du service et/ou pour considérer pour ladite médiation des données environnementales de terminal et/ou d'utilisateur, en particulier des données d'emplacement décrivant l'emplacement réel dudit client.

3. Serveur d'interaction (2) selon la revendication 1,
**caractérisé en ce que**
le gestionnaire de modalité (5) est adapté pour accéder à des données de profilage de terminal, d'utilisateur et/ou de service (57) pour servir d'intermédiaire entre lesdites capacités de modalité de dialogue et/ou les conditions requises de modalité de dialogue du client et de l'application de serveur.

4. Serveur d'interaction (2) selon la revendication 1,
**caractérisé en ce que**
le gestionnaire de modalité (5) est adapté pour créer une spécification de modalité de dialogue dudit dialogue spécifiant les modalités de dialogue sélectionnées et le gestionnaire de modalité (5) comprend un moteur de dialogue (52) accédant à un script de service multimodal fourni par l'application de serveur, ladite spécification de dialogue et une base de données de construction de dialogue (7).

5. Serveur d'interaction (2) selon la revendication 4,
**caractérisé en ce que**
le serveur d'interaction comprend une dorsale multimodale (6) exécutant une description de dialogue fournie par le moteur de dialogue, la dorsale multimodale (6) comprend un ensemble d'applications de navigateur (56, 66) et la dorsale multimodale (6) est adaptée pour utiliser des applications sélectionnées parmi ces applications de navigateur (56, 66) pour communiquer avec le client (47 à 49).

6. Serveur d'interaction (2) selon la revendication 5,
**caractérisé en ce que**
le serveur d'interaction (2) comprend un ensemble d'unités de traitement multimédia (63, 64) auquel la dorsale multimodale accède pour communiquer avec le client (47 à 49).

7. Procédé pour adapter des modalités d'un dialogue entre un client (41 à 44 et 47 à 49) et un serveur (31 à 33),
le procédé comprenant l'étape consistant à : fournir un ensemble de capacités de modalité de dialogue et de conditions requises de modalité de dialogue à un serveur d'interaction (2) comprenant un gestionnaire de modalité (5), dans lequel une modalité décrit la manière dont les informations sont présentées depuis le client vers l'utilisateur ou depuis l'utilisateur vers le client et spécifie si les informations sont soumises comme un message vocal, des informations écrites sur un écran, par une icône ou un graphique affiché sur un écran, en enfonçant une touche spécifique d'un clavier, en saisissant une commande manuscrite, par un mot de commande saisi ou en touchant une icône sur un pavé tactile ; le procédé comprend également les étapes consistant à servir d'intermédiaire, par le gestionnaire de modalité (5) entre les capacités de modalité de dialogue et les conditions requises de dialogue du client (44) et du serveur (31) et considérer pour ladite médiation des données de capacité de modalité décrivant des capacités de représentation de terminal et de service et des données de conditions requises de modalité décrivant des conditions requises de représentation de service et/ou d'utilisateur ; et le gestionnaire de modalité (5) sélectionnant les modalités de dialogue dudit dialogue en fonction de ladite médiation.

8. Procédé selon la revendication 7,
**caractérisé en ce qu'**il comprend l'étape supplémentaire consistant à fournir, par le serveur d'interaction, une conversion de modalité et/ou de protocole.

9. Produit logiciel informatique destiné à adapter les modalités d'un dialogue entre un client (41 à 49) et un serveur (31 à 33),
le produit logiciel informatique étant adapté pour réaliser, lorsqu'il est exécuté par un ordinateur, l'étape consistant à recevoir un ensemble de données de capacité de modalité de dialogue et de données de conditions requises de modalité de dialogue du client et du serveur, dans lequel une modalité décrit la manière dont les informations sont présentées depuis le client vers l'utilisateur ou depuis l'utilisateur vers le client et spécifie si des informations sont soumises comme un message vocal, des informations écrites sur un écran, par une icône ou un graphique affiché sur un écran, en enfonçant une touche spécifique d'un clavier, en saisissant une commande manuscrite, par un mot de commande saisi ou en touchant une icône sur un pavé tactile ; le produit logiciel informatique est également adapté pour réaliser les étapes consistant à : servir d'intermédiaire entre les capacités de modalité de dialogue et les conditions requises de modalité de dialogue du client (41 à 49) et du serveur (31 à 33) et considérer pour ladite médiation des données de capacité de modalité décrivant des capacités de représentation de terminal et de service et des données de conditions requises de modalité décrivant des conditions requises de représentation de service et/ou d'utilisateur ; et sélectionner les modalités de dialogue dudit dialogue en fonction de ladite médiation.
